# EUROPÄISCHE PATENTSCHRIFT

(11) **EP 0 703 466 B1**
(45) Veröffentlichungstag und Bekanntmachung des Hinweises auf die Patenterteilung: **15.11.2000**
(21) Anmeldenummer: 95114456.7
(22) Anmeldetag: 14.09.1995
(51) Int. Cl.: G01S 13/10

(54) **Puls-Radarverfahren**
Pulse radar method
Procédé pour radar à impulsions

(30) Priorität: 22.09.1994 DE 4433776
(43) Veröffentlichungstag der Anmeldung: 27.03.1996
(73) Patentinhaber: DaimlerChrysler AG, 70567 Stuttgart (DE)
(72) Erfinder: Schneider, Robert, D-89233 Neu-Ulm (DE); Wanielik, Gerd, Dr., D-89079 Ulm (DE); Wenger, Josef, D-89250 Senden (DE)
(74) Vertreter: Fröhling, Werner Otto, Dr.

(56) Entgegenhaltungen:
- EP-A- 0 529 704
- GB-A- 2 273 015

## Beschreibung

Die Erfindung betrifft ein Puls-Radarverfahren nach dem Oberbegriff des Patentanspruchs 1.

Ein solches Verfahren ist aus EP 0 529 704 A bekannt.

Zur Bestimmung der Zielentfernung wird bei einem Puls-Radarverfahren das Empfangssignal in einem vorgebbaren Zeitraster abgetastet, was einer Unterteilung des Überwachungsbereichs in Entfernungstore (Rangegates) entspricht. Vorzugsweise wird das Empfangssignal mittels eines Lokaloszillator (LO)-Signals ins Basisband oder in eine Zwischenfrequenz umgesetzt und einer Digital-Analog-Wandlung unterzogen. Die Entfernungsauflösung ist insbesondere auch durch die maximale Wandlungsrate der Analog-Digital-Wandler begrenzt. Eine Steigerung der Wandlungsrate ist mit schnell steigenden Kosten und Aufwand für die Wandler verbunden.

Aufgabe der vorliegenden Erfindung ist es, bei einem Puls-Radarverfahren eine hohe Entfernungsauflösung bei niedriger Datenrate zu erreichen.

Die Erfindung ist im Patentanspruch 1 beschrieben. Die Unteransprüche enthalten vorteilhafte Ausgestaltungen und Weiterbildungen der Erfindung.

Für das erfindungsgemäße Verfahren können langsame und damit preisgünstige Analog/Digital-Wandler in Verbindung mit sehr schnellen Zeittorschaltungen zur Abtastung eingesetzt werden, die einfach, preisgünstig und flexibel steuerbar sind. Letzteres ermöglicht vorteilhafterweise auch eine veränderbare, flexible Abtaststrategie, z.B. durch Verändern der Abtastzeitpunkte der Zeittorschaltungen und Verändern der Entfernungsauflösung durch variable Pulslängensteuerung je nach Zielsituation.

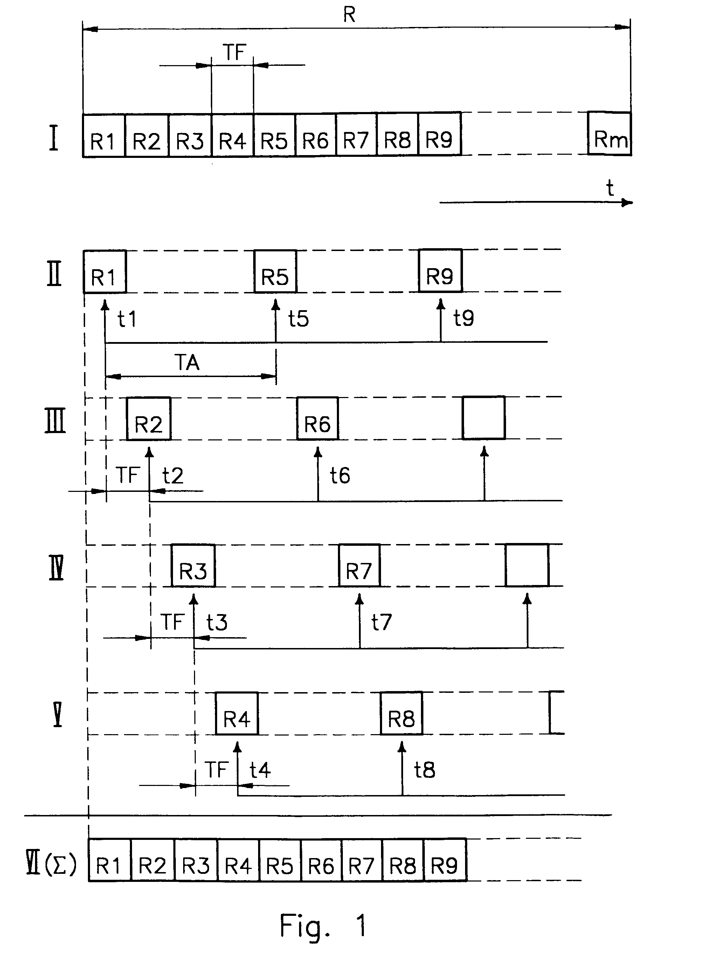

Die Erfindung ist nachfolgend unter Bezugnahme auf die Abbildung noch weiter veranschaulicht, wobei in mehreren Zeilen jeweils die zeitliche Aufeinderfolge der den unterschiedlichen Entfernungstoren zugeordneten Abtastwerte dargestellt sind.

In der Zeile I ist die Unterteilung des gesamten überwachten Entfernungsbereichs R in eine Vielzahl von Entfernungsinkrementen R1, R2..., Rm skizziert. Die Länge der Entfernungsinkremente im Empfangssignal beträgt TF (Länge des Abtastzeitfensters). Sie ist an die Länge der Sendepulse gekoppelt.

In der Zeile II ist angenommen, daß die maximal mögliche Wandlungsrate eines A/D-Wandlers eine minimale Wandlungsfolgezeit entsprechend einem Mehrfachen der Zeit fensterlänge TF erfordert. Die Folgezeit TA aufeinanderfolgender Abtastungen wird dann gleich der oder größer als diese minimale Wandlungsfolgezeit gewählt, im skizzierten Beispiel ist eine Abtastfolgezeit TA gleich der vierfachen Zeitfensterlänge TF zugrunde gelegt. Entsprechendes gilt für die Zeilen III, IV, und V, die verschiedenen Radarperioden entsprechen.

Die Zeitachsen sind dabei jeweils auf einen innerhalb der betroffenen Radarperiode einheitlich definierten Zeitpunkt, beispielsweise den Beginn des Sendepulses, bezogen.

Die Zeilen II bis V unterscheiden sich wesentlich in der relativen Lage des Zeit-Rasters, das durch die in regelmäßigen Zeitabständen vorgenommenen Abtastungen jeweils definiert ist.

Die Abtastraster sind jeweils um die Länge TF eines Zeitfensters verschoben, so daß sich vier mögliche relative Lagen des Abtastrasters innerhalb der Radarperiode ergeben. Beispielsweise werden in einer ersten Radarperiode gemäß Zeile II der Abbildung Abtastwerte zu relativen Zeitpunkten t1, t5, t9,...jeweils mit einer Zeitfensterlänge TF gewonnen entsprechend den Empfangssignalen aus den Entfernungsinkrementen R1, R5, R9,.... In weiteren Radarperioden gemäß Zeilen III bis V werden in entsprechender Weise zu relativen Zeitpunkten t2, t6,... bzw. t3, t7,... bzw. t4, t8,... Abtastwerte aus R2, R6,...bzw. R3, R7,... bzw. R4, R8,... gewonnen. Die aus Radarperioden zu vier verschiedenen relativen Zeitlagen des Abtastrasters gewonnenen Abtastwerte können durch Einordnen in der Reihenfolge ihrer relativen Abtastzeitpunkte ti (i = 1 bis m) zu einer lückenlosen Abtastwertfolge mit Abtastwerten zu jedem Entfernungsinkrement Ri zusammengefaßt werden (Zeile VI).

Die Radarperioden mit verschiedenen relativen Lagen der Abtastzeitraster folgen nicht notwendigerweise zeitlich unmittelbar aufeinander. Es ist auch möglich, eine Gruppe von Radarperioden (Burst) mit identischen relativen Zeitrastern zeitlich zu bündeln z.B. für eine Dopplerverarbeitung, und Gruppen mit verschiedenen relativen Zeitrastern zeitlich nacheinander abzuwickeln. Die in der Abbildung skizzierte Vorgehensweise mit Staffelung der Abtastzeitpunkte von Radarperiode zu Radarperiode bietet ebenfalls, allerdings in reduziertem Ausmaß, die Möglichkeit einer Dopplerverarbeitung.

Vorzugsweise wird in einem vorangehenden Detektionsmodus die Länge der Sendepulse und damit die Länge der Zeitfenster in gebräuchlicher Weise mit der Abtastrate abgestimmt und somit eine grobe Entfernungsauflösung erreicht. In diesem Modus kann bei einer Zielentdeckung auch eine schnelle und über einen weiten Dopplerbereich eindeutige Bestimmung der relativen Zielgeschwindigkeit erfolgen. Nach Maßgabe der in diesem Detektionsmodus erfolgten Zielentdeckungen und Dopplerschätzungen kann in flexibler Abtaststrategie nachfolgend auf kürzere Sendepulslängen und entsprechend kürzere Abtastzeitfenster mit zeitlicher Staffelung in verschiedenen Radarperioden übergegangen werden. Dabei kann auch eine sukzessive Verkürzung der Abtastzeitfenster in mehreren Schritten erfolgen.

Da dann nur bei einer vorherigen Zielentdeckung mit grober Entfernungsauflösung eine feinere Entfernungsauflösung nach der vorliegenden Erfindung durchgeführt wird, kann im letztgenanntem Schritt eine Ineinanderschachtelung von Radarperioden vorzugsweise mit unterschiedlicher Sendefrequenz vorgenommen und damit eine Verkürzung der effektiven Informationserneuerungszeit erreicht werden.

Die schnellen Zeittorschaltungen können auch ohne eine Verkürzung der Sendepulsdauer zur Erhöhung einer Entfernungsschätzung eingesetzt werden, indem in der beschriebenen Weise die Abtastzeitpunkte innerhalb einer Radarperiode im Zeitabstand TA und in verschiedenen Radarperioden um kleinere Zeitdifferenzen entsprechend TF gestaffelt gelegt werden, so daß sich ein Echopuls im Empfangssignal über mehrere Zeitabschnitte der Länge TF erstreckt. Eine Entfernungsschätzung kann dann durch Analyse der Signaleinhüllenden des Empfangssignals, z.B. Flankendetektoren vorgenommen werden.

## Patentansprüche

1. Puls-Radarverfahren mit Abtastung der Empfangssignale und Analog/Digital-Wandung der Abtastwerte, dadurch gekennzeichnet, daß die Folgezeit der Abtastungen (TA) innerhalb einer Radarperiode ein Mehrfaches der durch die Sendepulslänge bestimmten Länge des Abtastzeitfensters (TF) beträgt, und daß mehrere Radarperioden mit versetzten relativen Zeitlagen der Abtastzeitfenster zu einer lückenlosen Abtastwertfolge zusammengefaßt werden.

2. Verfahren nach Anspruch 1, dadurch gekennzeichnet, daß die Länge des Abtastzeitfenster wesentlich kürzer als die Länge der Sendepulse gewählt wird und daß in der zusammengefaßten Abtastwertfolge die Signaleinhüllende der Sendepulse ermittelt wird.

3. Verfahren nach Anspruch 1 oder Anspruch 2, dadurch gekennzeichnet, daß die Länge des Abtastzeitfensters und/oder der Sendepulse veränderlich vorgegeben wird.

4. Verfahren nach einem der Ansprüche 1 bis 3, dadurch gekennzeichnet; daß jeweils mehrere aufeinderfolgende Radarperioden mit einheitlicher relativer Lage der Abtastzeitfenster durchgeführt werden.

5. Verfahren nach einem der vorhergehenden Ansprüche, dadurch gekennzeichnet, daß zuvor in einem Detektionsmodus, bei welchem die Länge der Abtastzeitfenster gleich der Folgezeit der Abtastungen innerhalb einer Radarperiode ist, eine grobe Entfernungsauflösung mit guter Doppelschätzung durchgeführt wird.

## Claims

1. Pulsed radar method with scanning of received signals and analog-to-digital conversion of the scan values, characterised in that the sequence time of the scannings (TA) within a radar period amounts to a multiple of the length, which is determined by the emitted pulse length, of the scanning time window (TF) and that several radar periods with displaced relative time positions of the scanning time window are combined into a gap-free scanning value sequence.

2. Method according to claim 1, characterised in that the length of the scanning time window is selected to be substantially shorter than the length of the emitted pulse and that the signal envelope end of the emitted pulse is detected in the combined scanning pulse sequence.

3. Method according to claim 1 or claim 2, characterised in that the length of the scanning time window and/or the emitted pulse is preset to be variable.

4. Method according to one of claims 1 to 3, characterised in that several successive radar periods with a uniformly relative position of the scanning time window are performed each time.

5. Method according to one of the preceding claims, characterised in that a coarse distance resolution with good double-estimation is previously carried out in a detection mode in which the length of the scanning time window is equal to the sequence time of scannings within a radar period.

## Revendications

1. Procédé pour radar à impulsions avec échantillonnage des signaux de réception et conversion analogique/numérique des valeurs d'échantillonnage, caractérisé en ce que la durée de séquence des échantillonnage (TA) à l'intérieur d'une période du radar est égale à un multiple de la longueur, déterminée par la longueur des impulsions d'émission, de la fenêtre temporelle d'échantillonnage (TF) et que plusieurs périodes du radar ayant des fenêtres temporelles d'échantillonnage ayant des positions temporelles relatives décalées sont réunies pour former une suite ininterrompue de valeurs d'échantillonnage.

2. Procédé selon la revendication 1, caractérisé en ce que la longueur de la fenêtre temporelle d'échantillonnage est choisie nettement inférieure à la longueur des impulsions d'émission et que l'enveloppe de signal des impulsions d'émission est déterminée dans la suite de valeurs d'échantillonnage réunies.

3. Procédé selon la revendication 1 ou la revendication 2, caractérisé en ce que la longueur de la fenêtre temporelle d'échantillonnage et/ou des impulsions d'émission est prédéterminée d'une manière variable.

4. Procédé selon l'une des revendications 1 à 3, caractérisé en ce qu'on réalise plusieurs périodes successives respectives du radar avec une position relative uniforme des fenêtres temporelles d'échantillonnage.

5. Procédé selon l'une de revendications précédentes, caractérisé en ce qu'une résolution approximative de distance est exécutée préalablement, avec une bonne estimation double, dans un mode de détection, lors duquel la longueur des fenêtres temporelles d'échantillonnage est égale à la durée de séquence des échantillonnages à l'intérieur d'une période du radar.
